# EUROPÄISCHE PATENTSCHRIFT

(11) **EP 4 302 035 B1**
(45) Veröffentlichungstag und Bekanntmachung des Hinweises auf die Patenterteilung: **02.10.2024**
(21) Anmeldenummer: 22711212.5
(22) Anmeldetag: 07.03.2022
(51) Int. Cl.: F27B 7/16

(54) **DREHROHROFEN UND VERFAHREN ZUM BRENNEN VON KARBONATHALTIGEM GUT, INSBESONDERE KALKSTEIN ODER DOLOMIT**
ROTARY KILN AND METHOD FOR FIRING CARBONACEOUS MATERIAL, IN PARTICULAR LIMESTONE OR DOLOMITE
FOUR ROTATIF ET PROCÉDÉ DE CUISSON DU PRODUIT CONTENANT DES CARBONATES, EN PARTICULIER CALCAIRE OU DOLOMITE

(30) Priorität: 05.03.2021 EP 21161137
(43) Veröffentlichungstag der Anmeldung: 10.01.2024
(73) Patentinhaber: Lhoist Recherche et Développement S.A., 1342 Ottignies-Louvain-la-Neuve (BE)
(72) Erfinder: KACZINSKI, Carsten, 44319 Dortmund (DE)
(74) Vertreter: Cohausz & Florack
(86) Internationale Anmeldenummer: PCT/EP2022/055693
(87) Internationale Veröffentlichungsnummer: WO 2022/184934

(56) Entgegenhaltungen:
- DE-A1- 2 325 781
- DE-C- 400 236
- DE-T2- 69 505 170
- DE-U- 7 029 355
- FR-A- 443 783
- US-A- 1 544 504
- US-A- 3 124 338

## Beschreibung

Die Erfindung betrifft einen Drehrohrofen zum Brennen von karbonathaltigem Gut, insbesondere Kalkstein oder Dolomit, umfassend ein Drehrohr mit einem Einlaufende zur Aufgabe des zu brennenden Gutes und einem Auslaufende zur Ausleitung des gebranntes Gutes, und eine im Bereich des Auslaufendes angeordnete Brennereinheit, wobei das Drehrohr an seinem Einlaufende eine Einlaufzone aufweist und an seinem Auslaufende eine Auslaufzone aufweist, wobei zwischen der Einlaufzone und Auslaufzone in Transportrichtung des Gutes eine Vorwärmzone und eine Brennzone angeordnet sind. Ferner betrifft die vorliegende Erfindung ein Verfahren zum Brennen von karbonathaltigem Gut, insbesondere Kalkstein und Dolomit, in einem solchen Drehrohrofen.

Drehrohröfen zum Brennen von karbonathaltigem Gut sind aus dem Stand der Technik seit Jahrzehnten bekannt und haben sich als effizient und zuverlässig arbeitender Ofentyp zum kontinuierlichen Kalzinieren verschiedener Arten von Materialien bewährt. Druckschriftlicher Stand der Technik findet sich beispielsweise in der EP 0 674 145 A1, US 1,544,504 A, oder der US 3,124,338 A.

Zentraler Bestandteil eines Drehrohrofens ist ein langes zylindrisches Drehrohr (oftmals 100 m oder länger), welches typischerweise mit etwa 2 bis 7% zur Horizontalen geneigt ist. Das Drehrohr dreht sich langsam mit 0,5 bis 1,5 U/min um seine Achse und das in das Drehrohr an dessen Einlaufende mittels Förderschnecke o.ä. eingebrachte zu brennende Gut bewegt sich schwerkraftbedingt langsam durch das Drehrohr in Richtung einer durch einen im Bereich des Ofenauslaufs angeordneten Brenner erzeugten Flamme. Üblicherweise ist der Ofen bis zu etwa 8 bis 20% des Ofendurchmessers mit dem zu brennenden Gut gefüllt. Das zu brennende Gut wandert von der idR wenige Meter langen Einlaufzone in die Vorwärmzone (teilweise auch als Übergangszone bezeichnet), in der bereits Temperaturen von ca. 1100 - 1200 °C vorliegen, und von dort in eine ausgedehnte Brennzone, welche durch maximale Temperaturen von 1500 - 1600°C charakterisiert ist. Hier findet temperaturbedingt zu einem ganz überwiegenden Teil die eigentliche Kalzinierung des zu brennenden Gutes statt. An die Brennzone schließt sich wiederum die einige Meter lange Auslaufzone des Drehrohrs an, in der das gebrannte Gut bereits beginnt abzukühlen. Von dort fällt das gebrannte Gut in der Regel durch einen Schacht auf eine Kühleinheit, beispielsweise einen Rostkühler. Die konkreten Längen der einzelnen Zonen sind auch von der Gesamtlänge des Drehrohrs und der relativen Position der Brennerlanze und der Flammenlänge abhängig.

Im Sinne eines effizienten Ofenbetriebs werden stets hohe Durchsatzraten angestrebt, wobei gleichzeitig sicherzustellen ist, dass die Kalzinierung des zu brennenden Gutes vollständig ist und das gesamte Kohlendioxid aus dem Material entfernt wird. Für eine schnelle und vollständige Kalzinierung ist dabei eine gründliche Durchmischung des zu brennenden Gutes von entscheidender Bedeutung.

Ein weiteres Problem im praktischen Betrieb stellt die ungleichmäßige Temperarturverteilung im gebrannten Gut dar, was unmittelbar eine Folge der Mischungscharakteristik des Gutes in einem Drehrohrofen ist. So bildet sich im Gutbett ein aktiver Anteil an der Oberfläche zum freien Ofenvolumen, welcher während der Rotation des Drehrohrs aktiv in Bewegung ist und in intensivem Temperaturaustausch mit der Ofenatmosphäre steht, während ein darunter liegender passiver Anteil zur Clusterbildung neigt und nicht an die Oberfläche gelangt. Dementsprechend kann der aktive Anteil im Gutbett in der Auslaufzone rasch abkühlen, während der passive Anteil mangels Austausch mit der in der Auslaufzone sich abkühlenden Ofenatmosphäre lange ein hohes Temperaturniveau hält. Dies kann dazu führen, dass sehr heißes gebranntes Gut aus dem passiven Anteil des Gutbetts die dem Drehrohr nachgelagerte Kühlvorrichtung durch Überhitzung beschädigt.

Es ist daher Aufgabe der vorliegenden Erfindung, einen Drehrohrofen zum Brennen von karbonathaltigem Gut, insbesondere von Kalkstein oder Dolomit, der eingangsgenannten Art anzugeben, welcher einen hohen Materialdurchsatz und dabei eine möglichst vollständige Kalzinierung des zu brennenden Gutes sicherstellt. Insbesondere soll eine Beschädigung dem Drehrohr nachfolgender Komponenten, insbesondere solcher zum Kühlen des gebrannten Gutes, durch eine zu hohe Temperatur des gebrannten Gutes vermieden werden.

Nach einem ersten Aspekt der vorliegenden Erfindung wird die vorstehend genannte Aufgabe mit einem Drehrohrofen nach dem Oberbegriff des Anspruchs 1 gelöst.

Der besondere Vorteil des erfindungsgemäßen Drehrohrofens liegt darin, dass durch Anordnung wenigstens eines Vorsprungs in der Auslaufzone das gebrannte Gut entlang der gesamten Tiefe des Gutbetts effektiv durchmischt wird, so dass nicht nur bei dem aktiven, sondern auch bei dem passiven Anteil des Gutes ein intensiver Temperaturaustausch mit der sich in der Auslaufzone abkühlenden Ofenatmosphäre erfolgt. Dies führt wiederum dazu, dass in dem Gut keine Temperaturspitzen auftreten, so dass eine temperaturbedingte Beschädigung der dem Drehrohr nachfolgenden Komponenten, insbesondere der Kühleinheiten, durch das gebrannte Gut minimiert ist. Dadurch, dass der wenigstens eine Vorsprung eine sich in Drehrichtung des Drehrohrs verjüngende Kontur aufweist, bewegt er sich nach Art eines Pfluges durch das Material und durchmischt und durchkämmt es dabei intensiv. Hierdurch wird eine maximale Durchmischung erreicht und die Zweiteilung des Gutbetts in aktiven und passiven Anteil vollständig aufgehoben.

Infolge einer dadurch verbesserten Kühlleistung in der Auslaufzone kann insgesamt der Materialdurchsatz durch den Drehrohrofen und somit die Prozesseffizienz gesteigert werden.

Nach einer ersten vorteilhaften Ausgestaltung der Erfindung ist vorgesehen, dass der wenigstens eine Vorsprung ein feuerfestes Material enthält. Hierdurch ist ein Einsatz auch bei sehr hohen Temperaturen problemlos möglich. Als feuerfestes Material eignet sich insbesondere Beton, speziell Feuerbeton, wie es dem Fachmann an sich bekannt ist.

Erfindungsgemäß weist der wenigstens eine Vorsprung eine sich in Drehrichtung des Drehrohrs verjüngende Kontur auf. Bevorzugt ist er dabei V-förmig ausgebildet, wobei die Spitze des "V" in Drehrichtung des Drehrohrs ausgerichtet ist und somit das durchzumischende gebrannte Gut durchpflügt.

Die sich verjüngende Kontur kann auch durch eine prismatische Geometrie, insbesondere die Geometrie eines Dreiecksprismas, bevorzugt eines gleichschenkligen Dreiecksprismas, verkörpert sein. Ebenso ist die Geometrie eines Pyramidenstumpfes möglich, wobei bevorzugt eine Kante des Pyramidenstumpfes zwecks Ausbildung der sich in Drehrichtung des Drehrohrs verjüngende Kontur in Drehrichtung des Drehrohrs angeordnet ist. Die Kanten des Dreiecksprismas oder des Pyramidenstumpfes können dabei abgestumpft oder abgerundet sein, um ein Abbröckeln empfindlicher Kanten im Ofenbetrieb zu vermeiden.

Zur Dimensionierung des wenigstens einen Vorsprungs hat die Anmelderin intensive experimentelle Untersuchungen durchgeführt. Demnach weist der wenigstens eine Vorsprung zum Zwecke einer besonders intensiven Durchmischung des gebrannten Gutes in der Auslaufzone des Drehrohrs vorteilhafterweise eine Höhe in bezogen auf das Drehrohr radialer Richtung zwischen 50 mm und 500 mm, bevorzugt zwischen 100 mm und 300 mm und besonders bevorzugt von ca. 200 mm, auf.

Ferner kann der wenigstens eine Vorsprung eine Länge in Umfangsrichtung des Drehrohrs zwischen 50 mm und 2000 mm, insbesondere zwischen 100 mm und 1000 mm, bevorzugt zwischen 300 mm und 500 mm und ganz besonders bevorzugt von ca. 400 mm, aufweisen. Die maximale Breite des wenigstens einen Vorsprungs in Längsrichtung des Drehrohrs kann zwischen 50 mm und 600 mm, bevorzugt zwischen 300 mm und 500 mm und besonders bevorzugt ca. 400 mm, betragen.

Der erfindungsgemäß in der Auslaufzone vorgesehenen wenigstens eine Vorsprung kann dauerhaft mit der inneren Ausmauerung des Drehrohrs verbunden sein. Um eine besonders sichere Verbindung zwischen der inneren Ausmauerung des Drehrohrs und dem Vorsprung sicherzustellen, ist nach einer weiteren vorteilhaften Ausgestaltung der Erfindung vorgesehen, dass der wenigstens eine Vorsprung mittels einer metallischen Verankerung, insbesondere einer angeschweißten metallischen Verankerung, am inneren Drehofenmantel befestigt ist.

Nach einer besonders vorteilhaften Ausgestaltung der Erfindung ist vorgesehen, dass in der Auslaufzone eine Mehrzahl von Vorsprüngen vorgesehen ist, wobei die Vorsprünge abhängig vom Durchmesser des Drehrohrs über den Umfang des Drehrohrs verteilt in Gruppen von 1 bis 10, speziell 3 bis 7, bevorzugt 4 bis 6 Vorsprüngen angeordnet sind. Hierdurch werden die Durchmischungsleistung und damit einhergehend eine gleichmäßigere Kühlung des gebrannten Gutes bereits in der Auslaufzone entscheidend gesteigert.

Dabei erweist sich als vorteilhaft, wenn die Vorsprünge einer Gruppe von Vorsprüngen in Längsrichtung des Drehrohrs alternierend versetzt, beispielsweise nach Art einer Zickzacklinie, angeordnet sind. Ferner können in Längsrichtung des Drehrohrs eine Mehrzahl von Gruppen von Vorsprüngen hintereinander angeordnet sein. Durch beide Maßnahmen wird die Effektivität der Durchmischung des gebrannten Gutes in der Auslaufzone weiter gesteigert.

Am Auslaufende des Drehrohrs ist ein Randabschnitt vorgesehen, in welchem kein Vorsprung angeordnet ist. Hierdurch wird die vorgesehene Abwurfposition des gebrannten Gutes in den sich an das Drehrohr anschließenden Kühler gegenüber einem Drehrohr ohne Vorsprünge nicht verändert, so dass eine nachträgliche Montage der Vorsprünge ohne weiteres möglich ist. In jedem Falle ist ein gleichmäßiges Materialbett im Kühler gewährleistet.

Nach einer weiteren besonders vorteilhaften Ausgestaltung der Erfindung ist vorgesehen, dass in der Vorwärmzone des Drehrohrs eine Mehrzahl von weiteren Vorsprüngen angeordnet ist, wobei die weiteren Vorsprünge als Gruppen im Wesentlichen parallel zur Längsachse des Drehrohrs hintereinander angeordnet sind. Hierdurch ergibt sich eine stark verbesserte Durchmischung des zu brennenden Gutes und damit eine schnellere Kalzinierung in gleichen Zeitintervallen, da infolge der gründlichen Durchmischung nicht nur das oberflächlich liegende, sondern auch das im inneren des Materialbettes befindliche Gut hohen Kalzinierungstemperaturen ausgesetzt ist und somit schneller kalziniert werden kann.

Nach einer besonders vorteilhaften Weiterbildung der vorstehenden Ausgestaltung kann vorgesehen sein, dass in Umfangsrichtung des Drehrohrs benachbart angeordnete weitere Vorsprünge benachbarter Gruppen von weiteren Vorsprüngen in Längsrichtung des Drehrohrs versetzt zueinander angeordnet sind, derart, dass in der Vorwärmzone spiralförmige Transportpfade für das zu brennende Gut gebildet sind. Dadurch wird ein vergleichsweise schnellerer Transport des zu brennenden Gutes durch das Drehrohr ermöglicht, was in Kombination mit der verbesserten Durchmischung des Gutes insgesamt zu einem höheren Ofendurchsatz führt und somit die Effizienz des Brennverfahrens steigert.

Aufgrund der bereits in der Vorwärmzone herrschenden sehr hohen Temperaturen ist hierbei bevorzugt, dass zumindest einige der weiteren Vorsprünge, bevorzugt alle, jeweils ein feuerfestes Material enthalten. Hierbei kann es sich um verschiedene hoch temperaturbeständige Materialien handeln, wie aus dem Stand der Technik an sich bekannt. Als besonders geeignet erweist sich Beton, insbesondere Feuerbeton.

Für die erfindungsgemäß in der Vorwärmzone vorgesehenen weiteren Vorsprünge haben sich in Versuchen der Anmelderin verschiedene Geometrien als geeignet herausgestellt. Bevorzugt werden prismatische Geometrien, insbesondere in Form eines Trapezprismas, speziell eines gleichschenkligen Trapezprismas. Ein solches Trapezprisma ist bevorzugt parallel zur Längserstreckung des Drehrohrs ausgerichtet und weist dementsprechend zwei zum Radius des Drehrohrs geneigte Schenkelflächen auf. Diese können einen Winkel zur Trapezbasis zwischen 35° und 75° und bevorzugt zwischen 60° und 70°, einschließen. Die Länge eines solchen Trapezprismas in Längsrichtung des Drehrohrs beträgt bevorzugt ca. 400 mm und die Höhe bevorzugt ca. 200 mm. Bei trapezförmiger Ausgestaltung beträgt ferner die Breite der unteren Trapezbasis bevorzugt ca. 200 mm und die Breite der oberen Basis bevorzugt ca. 100 mm.

Nach einer weiteren vorteilhaften Ausgestaltung der Erfindung ist vorgesehen, dass über den Umfang des Drehrohrs verteilt 3 bis 9, bevorzugt 6 Gruppen in Längsrichtung hintereinander angeordneter weiterer Vorsprünge vorgesehen sind.

Die erfindungsgemäß vorgesehenen Gruppen von im Wesentlichen parallel zur Längsachse des Drehrohrs hintereinander angeordneten weiteren Vorsprüngen können entlang der gesamten Länge der Vorwärmzone angeordnet sein. Nach einer besonders vorteilhaften Ausgestaltung der Erfindung ist vorgesehen, dass sich die Gruppen von Vorsprüngen über ein Fünftel bis ein Drittel der Gesamtlänge des Drehrohrs erstrecken.

Nach einer weiteren besonders vorteilhaften Ausgestaltung der Erfindung kann ferner vorgesehen sein, dass in der Einlaufzone des Drehrohrs wenigstens ein zusätzlicher Vorsprung, bevorzugt eine Mehrzahl von zusätzlichen Vorsprüngen, vorgesehen ist, wobei der wenigstens eine zusätzliche Vorsprung wenigstens eine zur Längsachse des Drehrohrs geneigte Gleitfläche zur Förderung des zu brennenden Gutes aus der Einlaufzone in die Vorwärmzone aufweist.

Dabei wird ausgenutzt, dass das zu brennende Gut durch die Rotation des wenigstens einen zusätzlichen Vorsprungs durch das Gutbett auf der wenigstens einen Gleitfläche desselben zu liegen kommt und infolge der besonderen Neigung der Gleitfläche schwerkraftbedingt zügig in Richtung der Vorwärmzone gleitet. Hierbei versteht es sich, dass die Drehrichtung des Drehrohrs und die Ausrichtung der Gleitfläche in Umfangsrichtung des Drehrohrs entsprechend zueinander anzupassen sind. Gleichzeitig wird auch hierdurch die Staubbildung erheblich reduziert, da ein Zermahlen des zu brennenden Gutes an den Verschleißringen der Ofeneinlaufabdichtung infolge einer Rückwärtsbewegung des Gutes in der Einlaufzone wirksam verhindert wird.

Bei der Gleitfläche des wenigstens einen weiteren Vorsprungs können unterschiedliche Neigungswinkel vorgesehen sein. Nach einer vorteilhaften Ausgestaltung der Erfindung weist die Gleitfläche des wenigstens einen weiteren Vorsprungs eine Neigung zur Längsachse des Drehrohrs von 15° bis 70° auf. Besonders gute Ergebnisse wurden bei einem Neigungswinkel zwischen 40° und 50°, speziell ca. 45° erzielt.

Auch der wenigstens eine zusätzliche Vorsprung kann ein feuerfestes Material enthalten. Hierbei kann es sich um verschiedene hoch temperaturbeständige Materialien handeln, wie aus dem Stand der Technik an sich bekannt. Als besonders geeignet erweist sich wiederum Beton, insbesondere Feuerbeton.

Für den wenigstens einen zusätzlichen Vorsprung haben sich in Versuchen der Anmelderin verschiedene Geometrien als geeignet herausgestellt. Bevorzugt werden prismatische Geometrien, insbesondere in Form eines geraden Prismas dreieckiger Grundfläche, speziell in Form eines rechtwinkligen Dreiecks, bei der die wenigstens eine Gleitfläche durch die Hypotenuse des rechtwinkligen Dreiecks gebildet wird.

Für eine besonders gute Wirksamkeit in Bezug auf die Förderung des zu brennenden Gutes von der Einlaufzone in Richtung der Vorwärmzone ist die Höhe des wenigstens einen zusätzlichen Vorsprungs, d.h. die Erstreckung in bezogen auf das zylindrische Drehrohr radialer Richtung, von Bedeutung. Diese kann 100 mm bis 500 mm, bevorzugt 150 mm bis 250 mm, typischerweise ca. 200 mm, betragen. Hierdurch ist sichergestellt, dass auf der wenigstens einen Gleitfläche des wenigstens einen zusätzlichen Vorsprungs hinreichend viel Gut aufliegt und durch die Neigung der Gleitfläche in der Folge in Richtung der Vorwärmzone gleitet. Ferner kann vorgesehen sein, dass der wenigstens eine zusätzliche Vorsprung eine sich im Wesentlichen parallel zur Längsachse des Drehrohrs erstreckende Länge von 100 mm bis 2000 mm, bevorzugt 350 mm bis 450 mm, typischerweise ca. 400 mm, aufweist.

Der wenigstens eine zusätzliche Vorsprung kann mittels einer verschweißten metallischen Verankerung am inneren Drehofenmantel befestigt sein.

Nach einer besonders vorteilhaften Ausgestaltung der Erfindung ist vorgesehen, dass in der Einlaufzone des Drehrohrs eine Mehrzahl von zusätzlichen Vorsprüngen vorgesehen ist, wobei die zusätzlichen Vorsprünge derart als Gruppe aneinandergereiht angeordnet sind, dass die jeweiligen Gleitflächen der zusätzlichen Vorsprünge eine gemeinsame Gleitfläche für das zu brennende Gut bilden. Hierdurch wird eine besonders wirkungsvolle Förderung des zu brennenden Gutes von der Einlaufzone des Drehrohrs zu dessen Vorwärmzone erreicht.

Dadurch, dass durch mehrere als Gruppe aneinandergereihte zusätzliche Vorsprünge eine gemeinsame Gleitfläche breitgestellt wird, kann einerseits eine besonders lange Gleitfläche bereitgestellt werden, welche sich praktisch entlang der gesamten Ausdehnung der Einlaufzone erstreckt. Gleichzeitig können im Falle einer Beschädigung beispielsweise eines einzelnen zusätzlichen Vorsprungs aus der Gruppe aneinandergereihter zusätzlicher Vorsprünge dieser gezielt ersetzt werden, ohne die Gesamtkonstruktion demontieren zu müssen. Die Mehrzahl von zusätzlichen Vorsprüngen ist bevorzugt im Wesentlichen identisch zueinander ausgebildet.

Eine weitere Verbesserung der Förderung des zu brennenden Gutes durch die Einlaufzone des Drehrohrs wird dadurch erzielt, dass über den Umfang des Drehrohrs 2 bis 8, insbesondere 4 bis 6 und ganz besonders bevorzugt 5 zusätzliche Vorsprünge oder Gruppen aneinandergereihter zusätzlicher Vorsprünge, angeordnet sind.

Die eingangs genannte Aufgabe wird verfahrensmäßig nach einem weiteren Aspekt der vorliegenden Erfindung mit einem Verfahren zum Brennen von karbonathaltigem Gut, insbesondere von Kalkstein oder Dolomit, gelöst, welches folgende Schritte aufweist:
- Einleiten des karbonathaltiges Gutes in das Drehrohr eines Drehrohrofens nach einem der Ansprüche 1 bis 13,
- Brennen des karbonathaltiges Gutes, wobei sich das karbonathaltige Gut durch das Drehrohr von der Einlaufzone durch die Vorwärmzone und die Brennzone zur Auslaufzone bewegt, wobei sich das Drehrohr in einer Drehrichtung dreht,
- Förderung des gebrannten Gutes durch die Auslaufzone, wobei der in der Auslaufzone angeordnete wenigstens eine Vorsprung das gebrannte Gut zur Verbesserung der Abkühlung durchkämmt, wobei ferner am Auslaufende des Drehrohrs ein Randabschnitt vorgesehen ist, in welchem kein Vorsprung angeordnet ist, wodurch die vorgesehene Abwurfposition des gebrannten Gutes gegenüber einem Drehrohr ohne Vorsprünge nicht verändert wird.

Für das Verfahren gelten die vorstehend genannten Vorteile entsprechend. Insbesondere wird ein effizientes Brennverfahren vorgeschlagen, welches sich durch einen hohen Materialdurchsatz durch den Drehrohrofen, eine gleichmäßig hohe Produktqualität bei dem gebrannten Gut infolge vollständiger Kalzinierung sowie durch eine einfache Durchführbarkeit auszeichnet. Speziell wird eine gründliche Durchmischung des gebrannten Gutes in der Auslaufzone des Drehrohrs erreicht, so dass eine gleichmäßige Abkühlung des gesamten gebrannten Gutes bereits in der Auslaufzone beginnt. Hierdurch werden folgende Anlagenkomponenten, insbesondere Kühler und Transportrinnen, insbesondere aber die folgenden Transportbänder, vor Temperaturspitzen geschützt.

Im Folgenden wird die Erfindung anhand einer ein Ausführungsbeispiel darstellenden Zeichnung näher erläutert. Es zeigen:
- Fig. 1: das Drehrohr eines Drehrohrofens in perspektivischer Ansicht,
- Fig. 2: das Drehrohr der Fig. 1 in unterbrochener perspektivischer Längsschnittansicht,
- Fig. 3: einen vergrößerten Ausschnitt der Auslaufzone des Drehrohrs der Fig. 1 in perspektivischer Längsschnittansicht,
- Fig. 4: einen Vorsprung in der Auslaufzone des Drehrohrs der Fig. 1 in perspektivischer Ansicht,
- Fig. 5: eine zweidimensionale unterbrochene Darstellung der "abgewickelten" Ofeninnenwand des Drehrohrs der Fig. 2 in stark schematischer Form,
- Fig. 6: einen vergrößerten Ausschnitt der Vorwärmzone des Drehrohrs der Fig. 1 in perspektivischer Längsschnittansicht,
- Fig. 7: einen Vorsprung in der Vorwärmzone des Drehrohrs der Fig. 1 in perspektivischer Ansicht,
- Fig. 8: einen vergrößerten Ausschnitt der Einlaufzone des Drehrohrs der Fig. 1 in perspektivischer Längsschnittansicht, und
- Fig. 9: einen Vorsprung in der Einlaufzone des Drehrohrs der Fig. 1 in perspektivischer Ansicht.

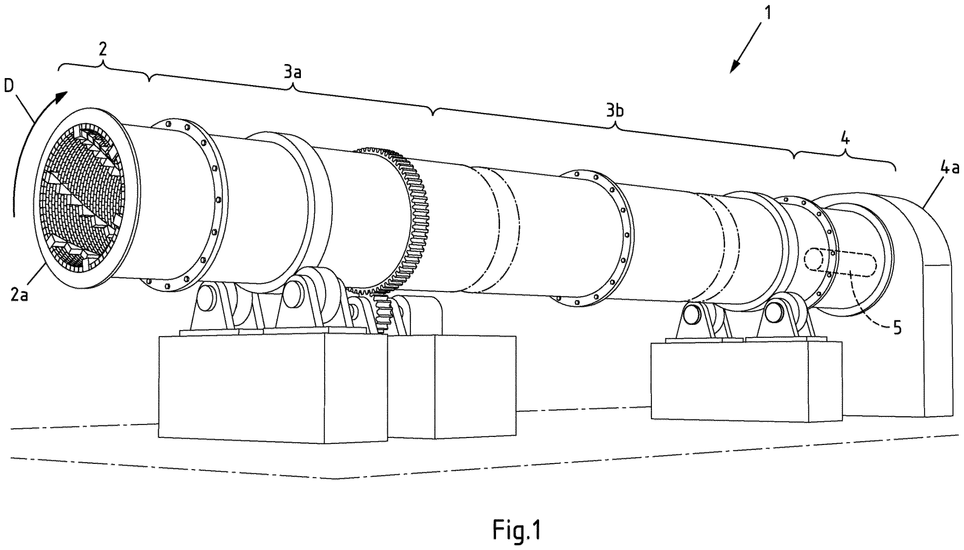

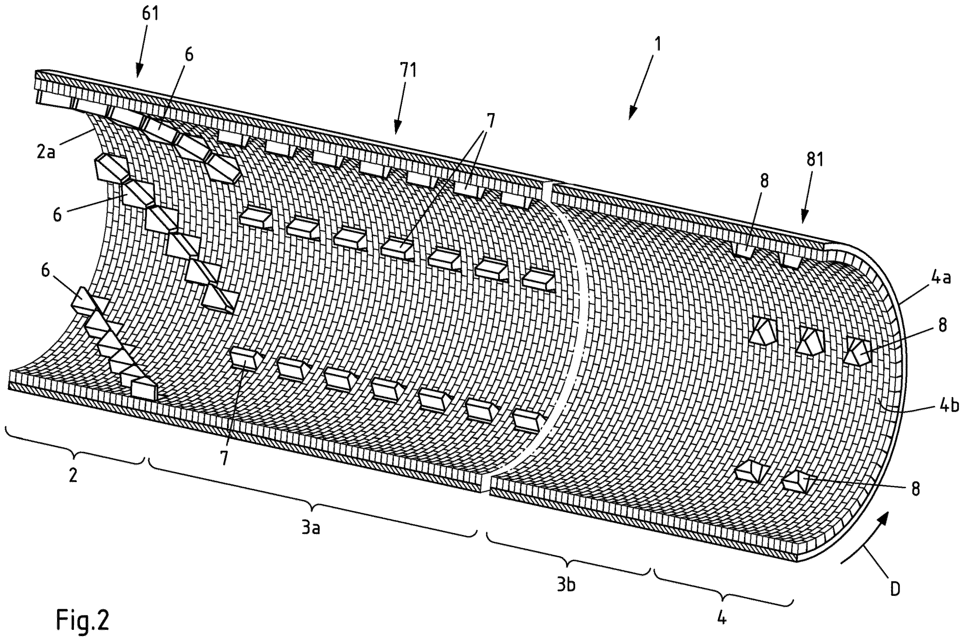

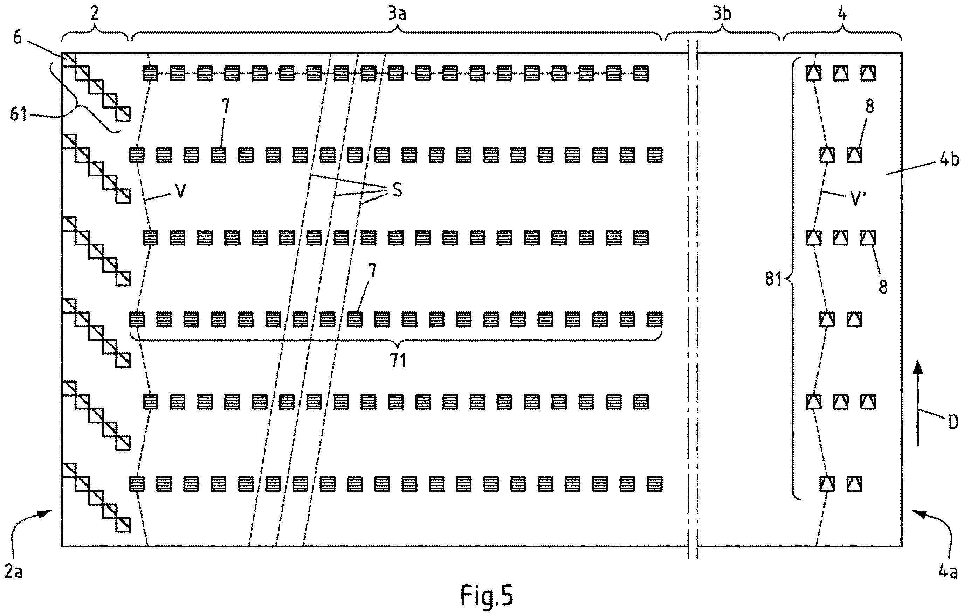

In Fig. 1 ist das Drehrohr 1 eines Drehrohrofens mit üblichen Lagerungs- und Antriebskomponenten, auf die im Folgenden nicht näher eingegangen wird, dargestellt. Das Drehrohr 1 umfasst ein - hier vorderseitig dargestelltes - Einlaufende 2a und ein rückseitiges Auslaufende 4a. Entlang der Längserstreckung des Drehrohrs 1 umfasst das Drehrohr 1 in Bezug auf den Materialaufgabe-, Brenn- und Materialaustragprozess eine Einlaufzone 2, eine Vorwärmzone 3a (auch "Übergangszone" genannt), eine Brennzone 3b sowie eine Auslaufzone 4 (s. auch Fig. 2 und 5). Im Bereich des Auslaufendes 4a ist eine Brennerlanze 5 angeordnet, mittels derer im Betrieb des Drehrohrofens eine in das Drehrohr 1 hineinragende Flamme erzeugt wird. In einem Ausführungsbeispiel weist das Drehrohr 1 eine Gesamtlänge von ca. 90 m auf, wobei die Länge der Einlaufzone 2 ca. 2 m, die der Vorwärmzone 3a ca. 32 m, die Länge der Brennzone 3b ca. 53 m und die der Auslaufzone 4 ca. 3 m beträgt. Es versteht sich, dass diese Längenangaben rein beispielhaft zu verstehen sind. Anders dimensionierte Drehrohre sind aus dem Stand der Technik ebenfalls bekannt. Die höchsten durch die Brennerflamme erzeugten Temperaturen werden im Betrieb des Drehrohrofens in der Brennzone 3b erzielt und betragen ca. 1500 - 1600°C, so dass in dieser Zone der ganz überwiegende Teil der Kalzinierungsreaktion abläuft.

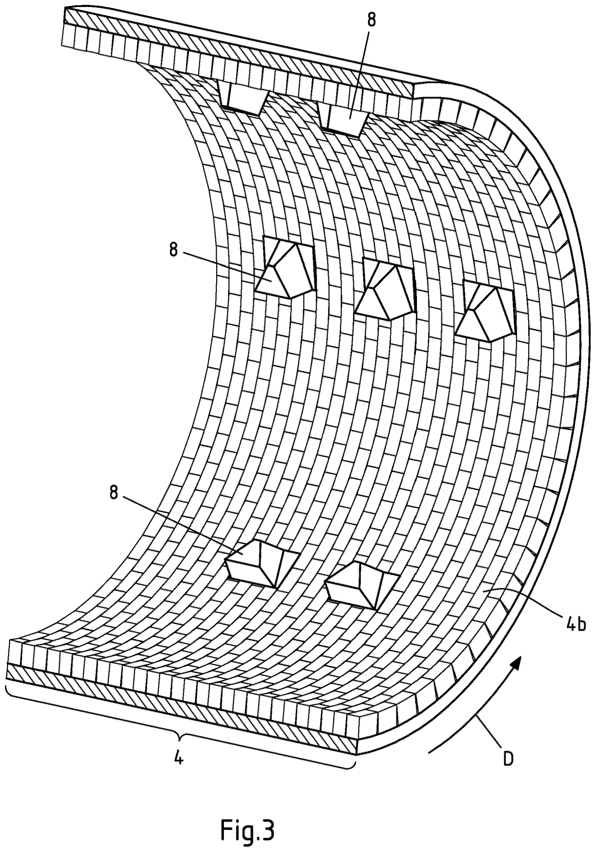

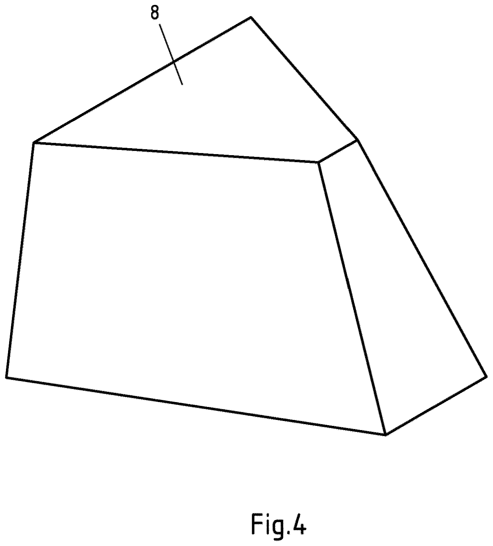

Wie in der perspektivischen Längsschnittansicht des Drehrohrs 1 der Fig. 2 dargestellt, umfasst das Drehrohr 1 in der Auslaufzone 4 des Drehrohrs 1 eine Mehrzahl von Vorsprüngen 8, welche über den Umfang des Drehrohrs 1 in Gruppen 81 angeordnet sind. Jeder Vorsprung 8 weist seinerseits eine sich in Drehrichtung D des Drehrohrs 1 verjüngende Kontur auf, wie in den Detailzeichnungen der Fig. 3 und 4 noch genauer dargestellt ist. Im Einzelnen ist die sich verjüngende Kontur der Vorsprünge 8 (fachsprachlich auch "Schwerter" genannt) als Pyramidenstumpf mit der Grundfläche eines gleichschenkligen spitzwinkligen Dreiecks ausgebildet (s. Fig. 4), wobei der spitze Winkel in Drehrichtung D des Drehrohrs 1 vorauseilt und aus Stabilitätsgründen leicht abgestumpft ist. Durch diese Form der Vorsprünge 8 ist es möglich, das gebrannte Gut in der Auslaufzone 4 nach Art eines Pfluges zu durchkämmen, wobei es zu einer intensiven Durchmischung kommt. Dies führt wiederum dazu, dass in dem Gut keine Temperaturspitzen auftreten, so dass die Gefahr einer temperaturbedingten Beschädigung der dem Drehrohr 1 nachfolgenden Komponenten (nicht dargestellt), insbesondere der Kühleinheiten, durch das gebrannte Gut minimiert ist. Um eine maximale Temperaturfestigkeit sicherzustellen, enthalten die Vorsprünge 8 vorliegend Feuerbeton. Ferner ist jeder Vorsprung 8 an der Innenwand des Drehrohrs 1 mittels einer metallischen Verankerung verschweißt.

Wie insbesondere in der zweidimensionalen Darstellung der "abgewickelten" Offeninnenwand des Drehrohrs 1 (Fig. 5) erkennbar ist, umfasst eine Gruppe 81 von Vorsprüngen 8 sechs Vorsprünge, welche vorliegend alternierend in Längsrichtung des Drehrohrs1 versetzt angeordnet sind. Dies ist in Fig. 5 durch eine Zickzacklinie V' angedeutet. Ferner sind, wie Fig. 5 zeigt, in Längsrichtung des Drehrohrs 1 eine Mehrzahl von Gruppen 81 - vorliegend drei - von Vorsprüngen 8 hintereinander angerordnet, wobei die in Bezug auf das Auslaufende 4a des Drehrohrs 1 randständige Gruppe lediglich 3 Vorsprünge 8 umfasst. Insbesondere durch die alternierende Versetzung der Vorsprünge 8 einer Gruppe 81 wird die Effektivität der Durchmischung des gebrannten Gutes in der Auslaufzone 4 weiter gesteigert.

Zwischen dem Auslaufende 4a des Drehrohrs 1 und der randständigen Gruppe 81 von nur drei Vorsprüngen 8 ist ein ca. 400 mm breiter Randabschnitt 4b vorgesehen, in welchem kein Vorsprung 8 angeordnet ist, damit die originale Abwurfposition in den Kühlerschacht nicht durch die Vorsprünge 8 verändert wird.

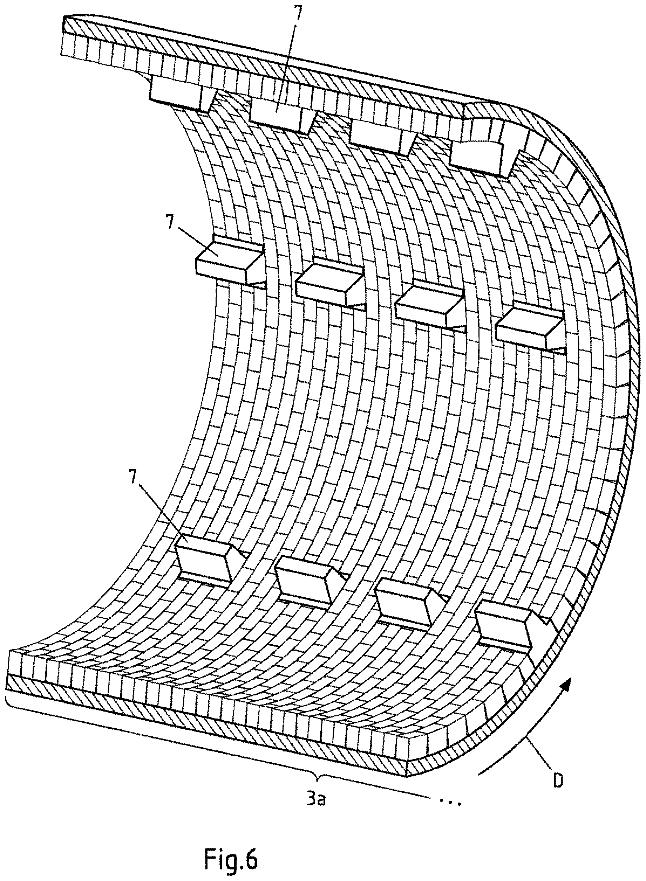

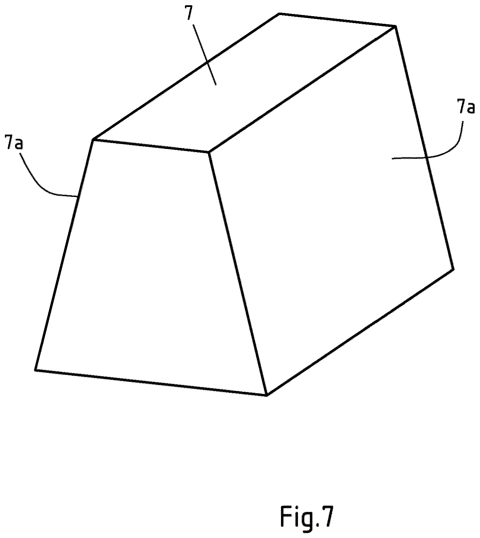

Wie Fig. 5 weiter zeigt, sind in der Vorwärmzone 3a des Drehrohrs 1 eine Mehrzahl weiterer Vorsprünge 7 (fachsprachlich "Mitnehmer") vorgesehen, wobei die weiteren Vorsprünge 7 als Gruppen 71 im Wesentlichen parallel zur Längsachse des Drehrohrs 1 hintereinander angeordnet sind. Dabei sind in Umfangsrichtung des Drehrohrs 1 benachbart angeordnete weitere Vorsprünge 7 benachbarter Gruppen 71 in Längsrichtung des Drehrohrs 1 alternierend versetzt zueinander angeordnet, wie durch die Zickzacklinie V dargestellt. Durch diese alternierend versetzte Anordnung sind in der Vorwärmzone 3a spiralförmige Transportpfade S (in Fig. 5 dargestellt als schräge Linien) für das zu brennende Gut gebildet. Diese dienen dazu, dass zu brennende Gut bei konstantem Energieeinsatz schneller und mit verbesserter Vermischung durch die Vorwärmzone 3a zu transportieren. Ferner dienen sie der Reduzierung der Staubbildung in der Vorwärmzone 3. Die Gruppen 71 von in Längsrichtung des Drehrohrs 1 hintereinander angeordneten weiteren Vorsprüngen 7 können sich über ein Drittel bis ein Fünftel der Gesamtlänge des Drehrohrs erstrecken. Wie in der vergrößerten Darstellung der Fig. 6 und 7 gezeigt, weisen diese weiteren Vorsprünge 7 ("Mitnehmer") die Form eines Trapezprismas auf mit geneigten Schenkelflächen 7a und einer Länge von vorliegend ca. 400 mm und einer Höhe von vorliegend ca. 200 mm. Der Neigungswinkel der Schenkelflächen 7a zur unteren Trapezbasis beträgt vorliegend ca. 76°. Durch die trapezförmige Ausbildung der Vorsprünge 7 ist sichergestellt, dass das im Ofenbetrieb durch die Vorsprünge 7 in der Vorwärmzone 3a durchmischte Gut nicht unter erhöhter Staubbildung von den Vorsprüngen 7 herabfällt, sondern entlang der Schenkelflächen 7a herabgleitet.

In der Längsschnittdarstellung der Fig. 2 und der zweidimensionalen Darstellung der Fig. 5 ist weiterhin erkennbar, dass in der Einlaufzone 2 des Drehrohrs 1 eine Mehrzahl zusätzlicher Vorsprünge 6 angeordnet ist, die eine spezifische Form aufweisen und als Gruppen 61 in gestufter Form aneinandergereiht angeordnet sind, wie im Folgenden beschrieben wird. Die zusätzlichen Vorsprünge 6 werden fachsprachlich auch als "Verdränger" bezeichnet.

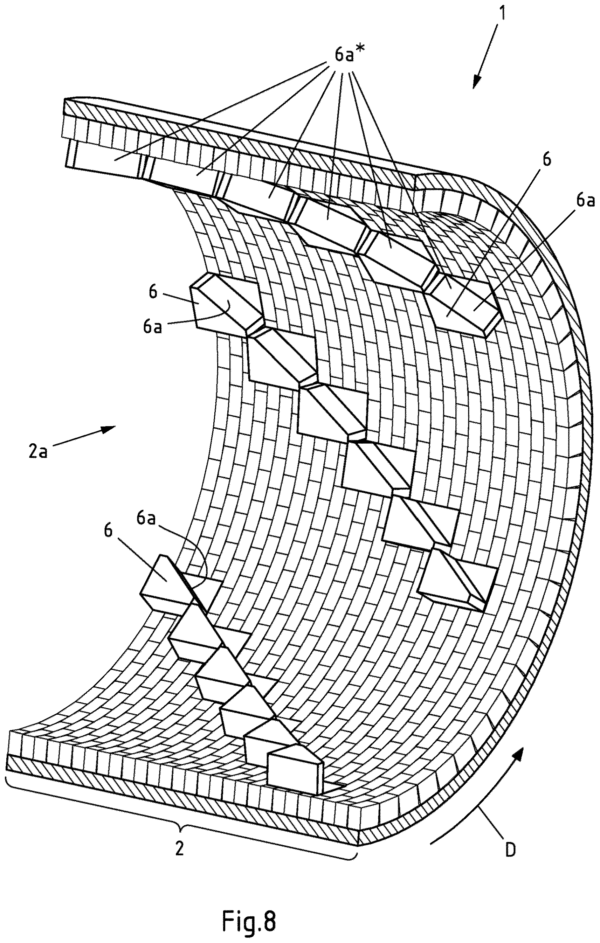

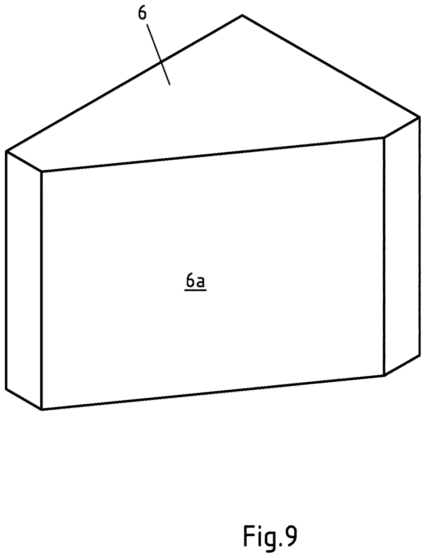

Wie in den Fig. 1, 2, 5 sowie 8 und 9 gezeigt, sind die als Gruppe 61 von vorliegend sechs aneinandergereihten zusätzlichen Vorsprünge 6 im Wesentlichen zueinander identisch ausgebildet und weisen gemäß Fig. 9 vorliegend im Wesentlichen die Form Dreiecksprismas mit der Grundfläche eines rechtwinkligen, gleichschenkligen Dreiecks auf, wobei die spitzen Winkel des Dreiecks aus Stabilitätsgründen abgestumpft sind. Jeder zusätzliche Vorsprung 6 weist eine Gleitfläche 6a auf, welche zur Längsachse des Drehrohres 1 geneigt angeordnet ist. Bevorzugt ist dabei ein Neigungswinkel von ca. 45° gewählt. Wie erwähnt, sind die zusätzlichen Vorsprünge 6 in gestufter Form aneinander gereiht, und zwar derart, dass durch die einzelnen Gleitflächen 6a der zusätzlichen Vorsprünge 6 eine gemeinsame Gleitfläche 6a* gebildet wird, welche vorliegend ebenfalls in einem Winkel von ca. 45° zur Längsachse des Drehrohrs 1 geneigt ist.

Ferner sind die Gleitflächen 6a der zusätzlichen Vorsprünge 6 und dementsprechend die gemeinsame Gleitfläche 6a* relativ zur Drehrichtung D des Drehrohrs 1 derart ausgerichtet, dass im Betrieb des Ofens das zu brennende Gut auf den Gleitflächen 6a, 6a* zu liegen kommt, und aufgrund der gewählten Neigung der Gleitflächen 6a, 6a* zur Längsachse des Drehrohrs 1 schwerkraftbedingt zügig in Richtung der Vorwärmzone 3 gleitet, ohne dass es dabei zu einer unerwünschten Rückwärtsbewegung des zu brennenden Gutes in Richtung des Einlaufendes 2a kommt.

Wie insbesondere in Fig. 1 und 5 gezeigt, sind über den Umfang verteilt an der Innenwand des Drehrohrs 1 sechs Gruppen 61 gestuft aneinandergereihter weiterer Vorsprünge 6 vorgesehen.

## Patentansprüche

1. Drehrohrofen zum Brennen von karbonathaltigem Gut, insbesondere von Kalkstein oder Dolomit, umfassend ein Drehrohr (1) mit einem Einlaufende (2a) zur Aufgabe des zu brennenden Gutes und einem Auslaufende (4a) zur Ausleitung des gebranntes Gutes, und eine im Bereich des Auslaufendes (4a) angeordnete Brennereinheit (5), wobei das Drehrohr (1) an seinem Einlaufende (2a) eine Einlaufzone (2) aufweist und an seinem Auslaufende (4a) eine Auslaufzone (4) aufweist, wobei zwischen der Einlaufzone (2) und Auslaufzone (4) in Transportrichtung des Gutes eine Vorwärmzone (3a) und eine Brennzone (3b) angeordnet sind, in der Auslaufzone (4) des Drehrohrs (1) wenigstens ein Vorsprung (8) angeordnet ist, wobei der wenigstens eine Vorsprung (8) eine sich in Drehrichtung des Drehrohrs (1) verjüngende Kontur aufweist **dadurch gekennzeichnet, dass**
am Auslaufende (4a) des Drehrohrs (1) ein Randabschnitt (4b) vorgesehen ist, in welchem kein Vorsprung (8) angeordnet ist, derart, dass die vorgesehene Abwurfposition des gebrannten Gutes gegenüber einem Drehrohr ohne Vorsprünge nicht verändert wird.

2. Drehrohrofen nach Anspruch 1,
**dadurch gekennzeichnet, dass**
der wenigstens eine Vorsprung (8) ein feuerfestes Material enthält, wobei optional das feuerfeste Material Beton, insbesondere Feuerbeton, ist.

3. Drehrohrofen nach einem der Ansprüche 1 oder 2,
**dadurch gekennzeichnet, dass**
der wenigstens eine Vorsprung (8) V-förmig ausgebildet ist.

4. Drehrohrofen nach einem der Ansprüche 1 bis 3,
**dadurch gekennzeichnet, dass**
der wenigstens eine Vorsprung (8) eine prismatische Geometrie, insbesondere die Geometrie eines Dreiecksprismas, bevorzugt eines gleichschenkligen Dreiecksprismas, oder die Geometrie eines Pyramidenstumpfes aufweist.

5. Drehrohrofen nach einem der Ansprüche 1 bis 4,
**dadurch gekennzeichnet, dass**
der wenigstens eine Vorsprung (8) in Drehrichtung des Drehrohrs (1) abgestumpft oder abgerundet ist.

6. Drehrohrofen nach einem der Ansprüche 1 bis 5,
**dadurch gekennzeichnet, dass**
der wenigstens eine Vorsprung (8) eine Höhe in bezogen auf das Drehrohr (1) radialer Richtung zwischen 50 mm und 500 mm, bevorzugt zwischen 100 mm und 300 mm und besonders bevorzugt von ca.200 mm, aufweist,
und/oder dass der wenigstens eine Vorsprung (8) eine Länge in Umfangsrichtung des Drehrohrs (1) zwischen 50 mm und 2000 mm, insbesondere zwischen 100 mm und 1000 mm, bevorzugt zwischen 300 mm und 500 mm und ganz besonders bevorzugt von ca.400 mm, aufweist, und/oder dass der wenigstens eine Vorsprung (8) eine maximale Breite in Längsrichtung des Drehrohrs (1) zwischen 50 mm und 600 mm, bevorzugt zwischen 300 mm und 500 mm und besonders bevorzugt von ca.400 mm, aufweist.

7. Drehrohrofen nach einem der Ansprüche 1 bis 6,
**dadurch gekennzeichnet, dass**
der wenigstens eine Vorsprung (8) an der Innenwand des Drehrohrs (1) mittels einer metallischen Verankerung, insbesondere einer verschweißten metallischen Verankerung, befestigt ist.

8. Drehrohrofen nach einem der Ansprüche 1 bis 7,
**dadurch gekennzeichnet, dass**
in der Auslaufzone (4) eine Mehrzahl von Vorsprüngen (8) vorgesehen ist, wobei die Vorsprünge (8) über den Umfang des Drehrohrs (1) verteilt in Gruppen (81) von 1 bis 10, speziell 3 bis 7, bevorzugt 4 bis 6 Vorsprüngen (8) angeordnet sind, worin optional die Vorsprünge (8) einer Gruppe (81) von Vorsprüngen (8) alternierend in Längsrichtung des Drehrohrs(l) versetzt angeordnet sind, und/oder worin optional in Längsrichtung des Drehrohrs (1) eine Mehrzahl von Gruppen (81) von Vorsprüngen (8) hintereinander angerordnet sind.

9. Drehrohrofen nach einem der Ansprüche 1 bis 8,
**dadurch gekennzeichnet, dass**
in der Vorwärmzone (3a) des Drehrohrs (1) eine Mehrzahl von weiteren Vorsprüngen (7) angeordnet ist, wobei die weiteren Vorsprünge (7) als Gruppen (71) im Wesentlichen parallel zur Längsachse des Drehrohrs (1) hintereinander angeordnet sind.

10. Drehrohrofen nach Anspruch 9,
**dadurch gekennzeichnet, dass**
in Umfangsrichtung des Drehrohrs (1) benachbart angeordnete weitere Vorsprünge (7) benachbarter Gruppen (71) von weiteren Vorsprüngen (7) in Längsrichtung des Drehrohrs (1) alternierend versetzt zueinander angeordnet sind, derart, dass in der Vorwärmzone (3a) spiralförmige Transportpfade (S) für das zu brennende Gut gebildet sind.

11. Drehrohrofen nach Anspruch 9 oder 10,
**dadurch gekennzeichnet, dass**
zumindest einige der weiteren Vorsprünge (7) eine prismatische Geometrie, insbesondere die Geometrie eines Trapezprismas, bevorzugt eines gleichschenkligen Trapezprismas, aufweisen.

12. Drehrohrofen nach einem der Ansprüche 9 bis 11
**dadurch gekennzeichnet, dass**
die Gruppen (71) von im Wesentlichen parallel zur Längsachse des Drehrohrs (1) hintereinander angeordneten weiteren Vorsprüngen (7) sich über ein Fünftel bis ein Drittel der Gesamtlänge des Drehrohrs (1) erstrecken.

13. Drehrohrofen nach einem der Ansprüche 1 bis 12,
**dadurch gekennzeichnet, dass**
in der Einlaufzone (2) des Drehrohrs (1) wenigstens ein zusätzlicher Vorsprung (6), bevorzugt eine Mehrzahl von zusätzlichen Vorsprüngen (6), vorgesehen ist, wobei der wenigstens eine zusätzliche Vorsprung (6) wenigstens eine zur Längsachse des Drehrohrs (1) geneigte Gleitfläche (6a) zur Förderung des zu brennenden Gutes aus der Einlaufzone (2) in die Vorwärmzone (3a) aufweist, worin optional in der Einlaufzone (2) des Drehrohrs (1) eine Mehrzahl von zusätzlichen Vorsprüngen (6) vorgesehen ist, wobei die zusätzlichen Vorsprünge (6) derart als Gruppe (61) aneinandergereiht angeordnet sind, dass die jeweiligen Gleitflächen (6a) der zusätzlichen Vorsprünge eine gemeinsame Gleitfläche (6a*) für das zu brennende Gut bilden.

14. Verfahren zum Brennen von karbonathaltigem Gut, insbesondere von Kalkstein oder Dolomit,
**gekennzeichnet durch** folgende Schritte:
- Einleiten des karbonathaltigen Gutes in das Drehrohr (1) eines Drehrohrofens nach einem der Ansprüche 1 bis 13,
- Brennen des karbonathaltigen Gutes, wobei sich das karbonathaltige Gut durch das Drehrohr von der Einlaufzone (2) durch die Vorwärmzone (3a) und die Brennzone (3b) zur Auslaufzone (4) bewegt, wobei sich das Drehrohr in einer Drehrichtung (D) dreht,
- Förderung des gebrannten Gutes durch die Auslaufzone (4), wobei der in der Auslaufzone (4) angeordnete wenigstens eine Vorsprung (8) das gebrannte Gut zur Verbesserung der Abkühlung durchkämmt, wobei ferner am Auslaufende (4a) des Drehrohrs (1) ein Randabschnitt (4b) vorgesehen ist, in welchem kein Vorsprung (8) angeordnet ist, wodurch die vorgesehene Abwurfposition des gebrannten Gutes gegenüber einem Drehrohr ohne Vorsprünge nicht verändert wird.

## Claims

1. Rotary kiln for burning carbonate-containing material, in particular limestone or dolomite, comprising a rotary tube (1) having an inlet end (2a) for feeding the material to be burned and an outlet end (4a) for discharging the burnt material, and a burner unit (5) arranged in the region of the outlet end (4a), wherein the rotary tube (1) has an inlet zone (2) at its inlet end (2a) and an outlet zone (4) at its outlet end (4a), wherein a preheating zone (3a) and a combustion zone (3b) are arranged between the inlet zone (2) and outlet zone (4) in the direction of transport of the material, at least one projection (8) is arranged in the outlet zone (4) of the rotary tube (1), the at least one projection (8) having a contour tapering in the direction of rotation of the rotary tube (1),
**characterized in that**
an edge section (4b) is provided at the outlet end (4a) of the rotary tube (1), in which edge section no projection (8) is arranged, such that the intended ejection position of the burnt material is not changed relative to a rotary tube without projections.

2. Rotary kiln according to Claim 1,
**characterized in that**
the at least one projection (8) contains a refractory material, wherein the refractory material is optionally concrete, in particular refractory concrete.

3. Rotary kiln according to Claims 1 or 2,
**characterized in that**
the at least one projection (8) is V-shaped.

4. Rotary kiln according to any one of Claims 1 to 3,
**characterized in that**
the at least one projection (8) has a prismatic geometry, in particular the geometry of a triangular prism, preferably an isosceles triangular prism, or the geometry of a truncated pyramid.

5. Rotary kiln according to any one of Claims 1 to 4,
**characterized in that**
the at least one projection (8) is blunted or rounded in the direction of rotation of the rotary tube (1).

6. Rotary kiln according to any one of Claims 1 to 5,
**characterized in that**
the at least one projection (8) has a height in the radial direction in relation to the rotary tube (1) of between 50 mm and 500 mm, preferably of between 100 mm and 300 mm and particularly preferably of approximately 200 mm,
**and/or in that** the at least one projection (8) has a length in the circumferential direction of the rotary tube (1) of between 50 mm and 2000 mm, in particular of between 100 mm and 1000 mm, preferably of between 300 mm and 500 mm and very particularly preferably of approximately 400 mm,
**and/or in that** the at least one projection (8) has a maximum width in the longitudinal direction of the rotary tube (1) of between 50 mm and 600 mm, preferably of between 300 mm and 500 mm and particularly preferably of approximately 400 mm.

7. Rotary kiln according to any one of Claims 1 to 6,
**characterized in that**
the at least one projection (8) is attached to the inner wall of the rotary tube (1) by means of a metallic anchor, in particular a welded metallic anchor.

8. Rotary kiln according to any one of Claims 1 to 7,
**characterized in that**
a plurality of projections (8) are provided in the outlet zone (4), wherein the projections (8) are arranged in groups (81) of 1 to 10, specifically 3 to 7, preferably 4 to 6 projections (8) distributed over the circumference of the rotary tube (1), the projections (8) of a group (81) of projections (8) optionally being arranged alternately offset in the longitudinal direction of the rotary tube (1), and/or a plurality of groups (81) of projections (8) being arranged one behind the other in the longitudinal direction of the rotary tube (1).

9. Rotary kiln according to any one of Claims 1 to 8,
**characterized in that**
a plurality of further projections (7) are arranged in the preheating zone (3a) of the rotary tube (1), the further projections (7) being arranged as groups (71), one behind the other, substantially parallel to the longitudinal axis of the rotary tube (1).

10. Rotary kiln according to Claim 9,
**characterized in that**
further projections (7) of adjacent groups (71) of further projections (7) arranged adjacent to one another in the circumferential direction of the rotary tube (1) are arranged alternately offset in the longitudinal direction of the rotary tube (1), such that spiral-shaped transport paths (S) for the material to be burned are formed in the preheating zone (3a).

11. Rotary kiln according to Claims 9 or 10,
**characterized in that**
at least some of the further projections (7) have a prismatic geometry, in particular the geometry of a trapezoidal prism, preferably an isosceles trapezoidal prism.

12. Rotary kiln according to any one of Claims 9 to 11,
**characterized in that**
the groups (71) of further projections (7) arranged one behind the other substantially parallel to the longitudinal axis of the rotary tube (1) can extend over a fifth to a third of the overall length of the rotary tube (1).

13. Rotary kiln according to any one of Claims 1 to 12,
**characterized in that**
at least one additional projection (6), preferably a plurality of additional projections (6), is provided in the inlet zone (2) of the rotary tube (1), the at least one additional projection (6) having at least one sliding surface (6a) inclined with respect to the longitudinal axis of the rotary tube (1) for conveying the material to be burned from of the inlet zone (2) to the preheating zone (3a), a plurality of additional projections (6) optionally being provided in the inlet zone (2) of the rotary tube (1), the additional projections (6) being arranged in a row as a group (61) in such a way that the respective sliding surfaces (6a) of the additional projections form a common sliding surface (6a*) for the material to be burned.

14. Method for burning carbonate-containing material, in particular limestone or dolomite,
**characterized by** the following steps:
- introducing the carbonate-containing material into the rotary tube (1) of a rotary kiln according to any one of Claims 1 to 13,
- burning the carbonate-containing material, wherein the carbonate-containing material moves through the rotary tube from the inlet zone (2) through the preheating zone (3a) and the combustion zone (3b) to the outlet zone (4), wherein the rotary tube rotates in a direction of rotation (D),
- conveying the burnt material through the outlet zone (4), wherein the at least one projection (8) arranged in the outlet zone (4) combs through the burnt material to improve cooling, wherein furthermore an edge section (4b) is provided at the outlet end (4a) of the rotary tube (1), in which no projection (8) is arranged such that the intended ejection position of the burnt material is not changed relative to a rotary tube without projections.

## Revendications

1. Four tubulaire rotatif pour la calcination d'un produit contenant du carbonate, en particulier de calcaire ou de dolomite, comprenant un tube rotatif (1) comportant une extrémité d'entrée (2a) pour la fourniture du produit à calciner et une extrémité de sortie (4a) pour l'évacuation du produit calciné, et une unité formant brûleur (5) disposée dans la région de l'extrémité de sortie (4a), dans lequel le tube rotatif (1) présente, au niveau de son extrémité d'entrée (2a), une zone d'entrée (2) et présente, au niveau de son extrémité de sortie (4a), une zone de sortie (4), dans lequel une zone de préchauffage (3a) et une zone de calcination (3b) sont disposées entre la zone d'entrée (2) et la zone de sortie (4) dans le sens de transport du produit, au moins une saillie (8) est disposée dans la zone de sortie (4) du tube rotatif (1), dans lequel l'au moins une saillie (8) présente un contour se rétrécissant dans le sens de rotation du tube rotatif (1)
**caractérisé en ce que**
au niveau de l'extrémité de sortie (4a) du tube rotatif (1) est prévue une section de bord (4b) dans laquelle aucune saillie (8) n'est disposée, de telle sorte que la position d'éjection prévue du produit calciné n'est pas modifiée par rapport à un tube rotatif sans saillies.

2. Four tubulaire rotatif selon la revendication 1,
**caractérisé en ce que**
l'au moins une saillie (8) contient un matériau réfractaire, dans lequel, éventuellement, le matériau réfractaire est du béton, en particulier du béton réfractaire.

3. Four tubulaire rotatif selon l'une des revendications 1 ou 2,
**caractérisé en ce que**
l'au moins une saillie (8) est réalisée en forme de V.

4. Four tubulaire rotatif selon l'une des revendications 1 à 3,
**caractérisé en ce que**
l'au moins une saillie (8) présente une géométrie prismatique, en particulier la géométrie d'un prisme triangulaire, de préférence d'un prisme triangulaire isocèle, ou la géométrie d'une pyramide tronquée.

5. Four tubulaire rotatif selon l'une des revendications 1 à 4,
**caractérisé en ce que**
l'au moins une saillie (8) est tronquée ou arrondie dans le sens de rotation du tube rotatif (1).

6. Four tubulaire rotatif selon l'une des revendications 1 à 5,
**caractérisé en ce que**
l'au moins une saillie (8) présente une hauteur dans la direction radiale par rapport au tube rotatif (1) comprise entre 50 mm et 500 mm, de préférence entre 100 mm et 300 mm et de manière particulièrement préférée d'environ 200 mm,
**et/ou que** l'au moins une saillie (8) présente une longueur dans la direction circonférentielle du tube rotatif (1) comprise entre 50 mm et 2 000 mm, en particulier entre 100 mm et 1 000 mm, de préférence entre 300 mm et 500 mm et de manière tout particulièrement préférée d'environ 400 mm, **et/ou que** l'au moins une saillie (8) présente une largeur maximale dans la direction longitudinale du tube rotatif (1) comprise entre 50 mm et 600 mm, de préférence entre 300 mm et 500 mm et de manière particulièrement préférée d'environ 400 mm.

7. Four tubulaire rotatif selon l'une des revendications 1 à 6,
**caractérisé en ce que**
l'au moins une saillie (8) est fixée à la paroi intérieure du tube rotatif (1) au moyen d'un ancrage métallique, en particulier d'un ancrage métallique soudé.

8. Four tubulaire rotatif selon l'une des revendications 1 à 7,
**caractérisé en ce que**
une pluralité de saillies (8) sont prévues dans la zone de sortie (4), dans lequel les saillies (8) sont disposées de manière à être réparties sur la circonférence du tube rotatif (1) en groupes (81) de 1 à 10, de manière spécifique de 3 à 7, de préférence de 4 à 6 saillies (8), dans lequel, éventuellement, les saillies (8) d'un groupe (81) de saillies (8) sont disposées de manière décalée en alternance dans la direction longitudinale du tube rotatif (1), et/ou dans lequel, éventuellement, une pluralité de groupes (81) de saillies (8) sont disposés les uns derrière les autres dans la direction longitudinale du tube rotatif (1).

9. Four tubulaire rotatif selon l'une des revendications 1 à 8,
**caractérisé en ce que**
une pluralité d'autres saillies (7) sont disposées dans la zone de préchauffage (3a) du tube rotatif (1), dans lequel les autres saillies (7) sont disposées les unes derrière les autres en tant que groupes (71) sensiblement parallèlement à l'axe longitudinal du tube rotatif (1).

10. Four tubulaire rotatif selon la revendication 9,
**caractérisé en ce que**
d'autres saillies (7), disposées de manière adjacente dans la direction circonférentielle du tube rotatif (1), de groupes (71) d'autres saillies (7) adjacents sont disposées de manière à être décalées les unes par rapport aux autres en alternance dans la direction longitudinale du tube rotatif (1), de telle sorte que des chemins de transport (S) en forme de spirale pour le produit à calciner sont formés dans la zone de préchauffage (3a).

11. Four tubulaire rotatif selon la revendication 9 ou 10,
**caractérisé en ce que**
au moins certaines des autres saillies (7) présentent une géométrie prismatique, en particulier la géométrie d'un prisme trapézoïdal, de préférence d'un prisme trapézoïdal isocèle.

12. Four tubulaire rotatif selon l'une des revendications 9 à 11,
**caractérisé en ce que**
les groupes (71) d'autres saillies (7) disposées les unes derrière les autres sensiblement parallèlement à l'axe longitudinal du tube rotatif (1) s'étendent sur un cinquième jusqu'à un tiers de la longueur totale du tube rotatif (1).

13. Four tubulaire rotatif selon l'une des revendications 1 à 12,
**caractérisé en ce que**
dans la zone d'entrée (2) du tube rotatif (1) est prévue au moins une saillie supplémentaire (6), de préférence une pluralité de saillies supplémentaires (6), dans lequel l'au moins une saillie supplémentaire (6) présente au moins une surface de glissement (6a) inclinée par rapport à l'axe longitudinal du tube rotatif (1) pour l'acheminement du produit à calciner depuis la zone d'entrée (2) dans la zone de préchauffage (3a), dans lequel, éventuellement, une pluralité de saillies supplémentaires (6) sont prévues dans la zone d'entrée (2) du tube rotatif (1), dans lequel les saillies supplémentaires (6) sont disposées de manière à être alignées sous forme de groupe (61), de telle sorte que les surfaces de glissement (6a) respectives des saillies supplémentaires forment une surface de glissement commune (6a*) pour le produit à calciner.

14. Procédé permettant la calcination d'un produit contenant du carbonate, en particulier de calcaire ou de dolomite,
**caractérisé par** les étapes suivantes :
- introduction du produit contenant du carbonate dans le tube rotatif (1) d'un four tubulaire rotatif selon l'une des revendications 1 à 13,
- calcination du produit contenant du carbonate, dans lequel le produit contenant du carbonate se déplace à travers le tube rotatif depuis la zone d'entrée (2), à travers la zone de préchauffage (3a) et la zone de calcination (3b), jusqu'à la zone de sortie (4), dans lequel le tube rotatif tourne dans un sens de rotation (D),
- acheminement du produit calciné à travers la zone de sortie (4), dans lequel l'au moins une saillie (8) disposée dans la zone de sortie (4) ratisse le produit calciné pour améliorer le refroidissement, dans lequel une section de bord (4b), dans laquelle aucune saillie (8) n'est disposée, est en outre prévue au niveau de l'extrémité de sortie (4a) du tube rotatif (1), moyennant quoi la position d'éjection prévue du produit calciné n'est pas modifiée par rapport à un tube rotatif sans saillies.
